# DEMANDE DE BREVET EUROPEEN

(11) **EP 4 483 755 A1**
(43) Date de publication de la demande: **01.01.2025**
(21) Numéro de dépôt: 24182377.2
(22) Date de dépôt: 14.06.2024
(51) Int. Cl.: A47C 19/00, A47C 19/02, F16B 12/56, F16B 12/58, F16B 12/00

(54) **PIECE D'ANGLE DE STRUCTURE DE LIT, STRUCTURE DE LIT, KIT ET PROCEDE DE MONTAGE D'UNE STRUCTURE DE LIT**

(30) Priorité: 27.06.2023 FR 2306733
(71) Demandeur: Sedac France, 10400 Nogent-sur-Seine (FR)
(72) Inventeur: SOUVRE, Michel, 10400 Nogent-sur-Seine (FR); ROGISSART, Damien, 10400 Nogent-sur-Seine (FR)
(74) Mandataire: Cabinet Netter

(57) **Abrégé**

Pièce d'angle 3 de structure de lit 1, comprenant un corps 11 rigide allongé, le corps 11 comprenant une première face 13 et une deuxième face 15, caractérisée en ce qu'une première paire de creux 19 est ménagée dans le corps 11 à partir de la première surface 13 et une deuxième paire de creux 19 est ménagée dans le corps 11 à partir de la deuxième surface 15, chaque creux 19 étant défini par au moins un bord 20 faisant partie du corps 11, ledit bord 20 comprenant une patte 23 découpée dans le corps 11, déformable élastiquement et supportant un ergot 41 de maintien en saillie dans le creux 19.

## Description

L'invention concerne le domaine de la literie.

Un premier type de lit se compose d'une structure de lit également nommée cadre, d'un sommier, d'un matelas et d'éléments de couchage au contact de l'utilisateur. Dans un autre type de lit, le sommier repose sur des pieds indépendants, cf FR3120773. L'invention vise le premier type de lit.

La structure de lit est généralement démontable de manière à pouvoir être livrée sous un faible volume.

Les structures de lit sont montées sur le lieu d'utilisation. Les fabricants de lits cherchent à faciliter le montage des structures de lit afin d'éviter les erreurs de montage, voire l'endommagement de la structure de lit. Un montage simplifié est apprécié tant du client que du monteur.

Pour cela, les fabricants de lits cherchent à réduire le nombre de pièces et le nombre d'étapes de montage et leur complexité.

DE102017105258 propose un cadre de lit avec deux premières parties latérales parallèles l'une à l'autre, et avec deux deuxièmes parties latérales parallèles l'une à l'autre perpendiculairement aux premières, dans lequel les première et seconde parties latérales sont mises en prise l'une avec l'autre par des déplacements relatifs dans une direction de jonction.

L'invention vise à fournir un lit robuste, compact à l'état démonté, à nombre de pièces réduit et pouvant être produit par des procédés rapides, à basse température et à faible pertes de production.

L'invention vient améliorer la situation.

L'invention propose une pièce d'angle de structure de lit. La pièce d'angle comprend un corps rigide allongé selon un axe Z. Le corps comprend une première face normale à un axe X et une deuxième face normale à un axe Y. Les axes X, Y et Z formant un repère orthogonal. La pièce d'angle est caractérisée en ce qu'une première paire de creux est ménagée dans le corps à partir de la première surface, les creux de la première paire étant d'axe X, et une deuxième paire de creux est ménagée dans le corps à partir de la deuxième surface, les creux de la deuxième paire étant d'axe Y. Chaque creux est défini par au moins un bord faisant partie du corps. Ledit bord comprend une patte découpée dans le corps, déformable élastiquement et supportant un ergot de maintien en saillie dans le creux. L'invention permet de fixer de manière démontable des poutres en acier pour former une structure de lit. L'invention permet de limiter fortement le nombre de pièces nécessaire à la réalisation d'une structure de lit, notamment en petites pièces de quincaillerie, de supprimer le soudage et de réduire le volume des emballages.

Dans un mode de réalisation, le corps est symétrique par rapport à un plan d'axe Z et situé à 45 degrés d'un plan XZ et le corps est symétrique par rapport à un plan XY. La symétrie permet de n'avoir qu'une seule version de pièce au sein d'un lit, adapté pour s'installer à chaque coin de la structure de lit.

Dans un mode de réalisation, les creux présentent une section de profil rectangulaire. Des poutres de section rectangulaire peuvent être montées dans les pièces d'angle.

Dans un mode de réalisation, des évidements d'allègement sont ménagés dans le corps, les évidements étant disposés entre les creux d'une paire de creux. La masse et la quantité de matière sont réduites.

Dans un mode de réalisation, un perçage débouchant est ménagé dans le corps face à chaque ergot. Le démontage de la structure de lit est possible.

Dans un mode de réalisation, chaque creux comprend des rainures, parallèles à l'axe dudit creux, sur au moins une partie dudit au moins un bord de chaque creux. Les rainures permettent de compenser d'éventuelles petites différences de largeur des creux ou des poutres.

Dans un mode de réalisation, le corps comprend une face supérieure et l'un des creux de la première paire de creux et l'un des creux de la deuxième paire de creux est sensiblement affleurant à la face supérieure du corps, à une distance comprise entre 0 et 3 mm. Un sommier peut facilement être installé sur la structure de lit.

Dans un mode de réalisation, le corps présente une forme de cornière avec deux ailes, les creux étant ménagés dans une épaisseur des ailes de la cornière, et des nervures de renfort sont disposées dans un plan XY sur le corps, les nervures de renfort présentant une forme triangulaire ou trapézoïdale, les nervures de renfort étant disposées dans un plan comprenant un des bords, préférablement une nervure supplémentaire de renfort est disposée à équidistance des deux nervures de renfort. La pièce d'angle est rigide.

Dans un mode de réalisation, les ailes sont de même largeur.

Dans un mode de réalisation, des pattes saillantes sont disposées parallèlement aux axes de direction, lesdites pattes saillantes comprenant au moins un perçage. Des éléments de décoration peuvent être fixés sur la structure de lit.

Dans un mode de réalisation, une structure de lit comprend au moins quatre pièces d'angle de structure de lit et huit poutres. Chaque poutre est montée emboîtée dans deux creux de deux pièces d'angle de structure de lit afin de former au moins deux cadres rigides étagés avec quatre poutres chacun. Lesdites poutres comprennent des perçages pour loger les ergots, de manière à verrouiller les poutres dans les pièces d'angle. Le lit est composé d'un petit nombre de pièces tout en étant rigide.

Dans un mode de réalisation, le lit consiste en douze pièces. Ainsi, le lit peut consister en deux familles de pièces, notamment quatre pièces d'angle et huit poutres.

Dans un mode de réalisation, un kit comprend au moins quatre pièces d'angle de structure de lit et au moins huit poutres dans lesquelles des perçages pour loger les ergots sont ménagés aux extrémités, de manière à verrouiller les poutres dans les pièces d'angle. Le kit est compact et nécessite un emballage de faible masse, d'où une réduction des déchets.

L'invention propose également un procédé de montage d'une structure de lit, la structure de lit comprenant au moins quatre pièces d'angle de structure de lit et huit poutres. Chaque poutre est montée emboîtée dans deux creux de deux pièces d'angle de structure de lit afin de former au moins deux cadres rigides étagés avec quatre poutres chacun. Lesdites poutres comprennent des perçages pour loger les ergots, de manière à verrouiller les poutres dans les pièces d'angle. Au montage, les poutres sont emboîtées dans les creux de manière à former deux cadres étagés distants. Le montage est simple et peut être assuré par des personnes non formées. La notice de montage est simple.

D'autres caractéristiques et avantages de l'invention apparaîtront à l'examen de la description détaillée ci-après, et des dessins annexés, sur lesquels :
[Fig.1]. illustre en perspective une structure de lit selon un aspect de l'invention.
[Fig.2]. illustre en perspective une pièce d'angle selon un aspect de l'invention avec une poutre montée.
[Fig.3]. illustre en vue de dessus une pièce d'angle selon un aspect de l'invention.
[Fig.4]. illustre en perspective une pièce d'angle selon un aspect de l'invention avec une poutre en approche.
[Fig.5]. illustre une vue de détail d'une structure de lit selon un aspect de l'invention équipé d'un sommier.
[Fig.6]. illustre en perspective un kit d'assemblage de structure de lit selon un aspect de l'invention mis en situation de montage.

Les dessins annexés pourront non seulement servir à compléter l'invention, mais aussi contribuer à sa définition, le cas échéant.

La Demanderesse a réalisé que le besoin existait de réaliser une structure de lit pouvant s'assembler de manière simple, avec le moins de pièces possible et à montage sans outil. Le montage peut être effectué par des translations. Le lit est dépourvu de pièce de visserie. Le lit est dépourvu de soudure.

Des axes X, Y et Z forment un repère orthogonal. L'axe Z étant vertical.

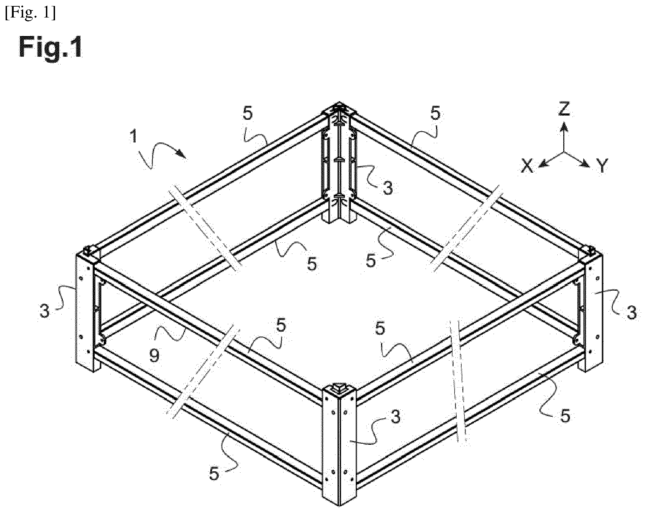

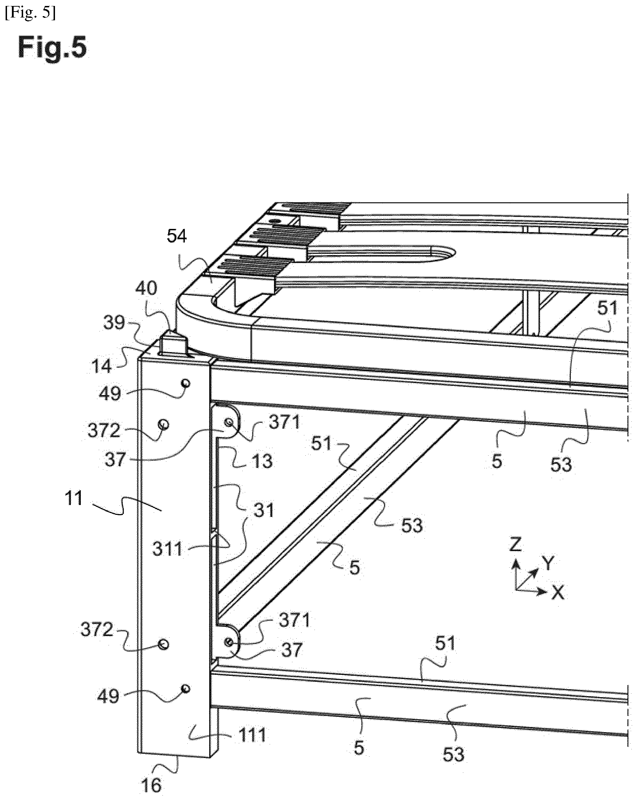

Comme illustré sur la [Fig.1], une structure de lit 1 comprend quatre pièces d'angle 3 et huit poutres 5. La structure de lit 1 présente une forme rectangulaire. La structure de lit 1 présente deux côtés longs et deux côtés courts. Les côtés longs sont parallèles. Les côtés courts sont parallèles. Chaque côté long comprend deux poutres 5 parallèles disposées selon un plan vertical longitudinal XZ. Chaque côté court comprend deux poutres 5 parallèles selon un plan vertical latéral YZ. Quatre poutres 5 sont disposées à un niveau bas et quatre poutres 5 sont disposées à un niveau haut. Les poutres 5 du niveau haut sont agencées de manière à supporter un sommier 2, cf [Fig.5]. Les quatre pièces d'angle 3 et les huit poutres 5 forment un parallélépipède rectangle.

Les côtés longs comprennent deux poutres 5 chacun, ou longerons. Les côtés courts comprennent deux poutres 5 chacun, ou traverses.

Dans une variante, la structure de lit 1 présente une forme carrée en vue de dessus. Les côtés sont alors de même longueur.

Les poutres 5 sont des tronçons de profilé tubulaire. Dans une variante, les poutres 5 sont pleines. Les poutres 5 sont généralement réalisées en métal, plus généralement en un alliage d'acier ou d'aluminium. Ici, les poutres 5 présentent une section de forme rectangulaire.

Dans une variante, les poutres 5 présentent une section de forme circulaire, carrée ou oblongue.

Les quatre pièces d'angle 3 sont disposées aux quatre angles de la structure de lit 1. Les quatre pièces d'angle 3 sont reliées par les poutres 5. Les poutres 5 sont montées par paire, à savoir deux paires de longerons et deux paires de traverses. Chaque paire de longerons comprend un longeron inférieur et un longeron supérieur. Les longerons sont montés perpendiculairement aux traverses.

Les pièces d'angle 3 présentent une forme allongée selon un axe Z. Chaque pièce d'angle 3 présente une hauteur selon l'axe Z généralement comprise entre 20 cm et 50 cm. Chaque pièce d'angle 3 supporte quatre poutres 5.

Les longerons et les traverses sont montés emboîtés dans les pièces d'angle 3. Ainsi, une paire de longerons et une paire de traverses sont emboîtées dans chaque pièce d'angle 3.

Les longerons et les traverses sont disposés horizontalement. Les pièces d'angle 3 sont disposées verticalement.

Les pièces d'angle 3 maintiennent les longerons et les traverses. Les pièces d'angle 3 forment des pieds pour la structure de lit 1.

La structure de lit 1 peut présenter une hauteur sensiblement égale à la hauteur des pièces d'angle 3.

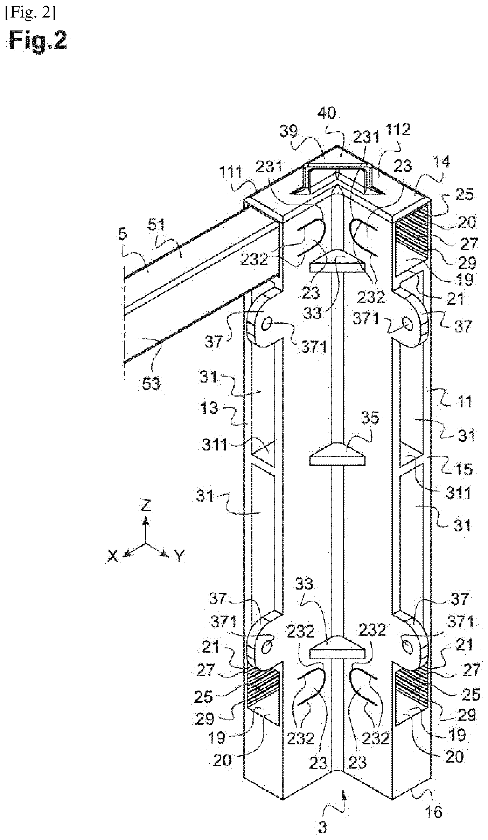

On fait référence à la [Fig.2].

Chaque pièce d'angle 3 comprend un corps 11 allongé rigide selon l'axe Z. Le corps 11 comprend une première surface 13 et une deuxième surface 15 orientées selon l'axe Z. La première surface 13 est normale à l'axe X. La deuxième surface 15 est normale à l'axe Y. La première surface 13 et la deuxième surface 15 présentent une forme extérieure rectangulaire. La première surface 13 et la deuxième surface 15 présentent une hauteur et une largeur similaires.

Le corps comprend une face supérieure 14 et une face inférieure 16. La face inférieure 16 est une surface d'appui de la pièce d'angle 3 sur un sol. La structure de lit 1 repose sur les quatre faces inférieures 16.

Le corps présente une forme générale de cornière d'axe Z avec une première aile 111 et une deuxième aile 112. La première surface 13 forme une extrémité de la première aile 111. La deuxième surface 15 forme une extrémité de la deuxième aile 112. La première aile 111 est orientée selon les axes X et Z. La deuxième aile 112 est orientée selon les axes Y et Z. La première aile 111 présente une épaisseur égale à la largeur de la première surface 13 et une hauteur égale à la hauteur de la première surface 13. La deuxième aile 112 présente une épaisseur égale à la largeur de la deuxième surface 15 et une hauteur égale à la hauteur de la deuxième surface 15. Ici, les deux ailes 111, 112 présentent une même largeur.

Le corps 11 est réalisé en matériau synthétique, notamment en polymère obtenu en injection plastique, par exemple en PP ou PA.

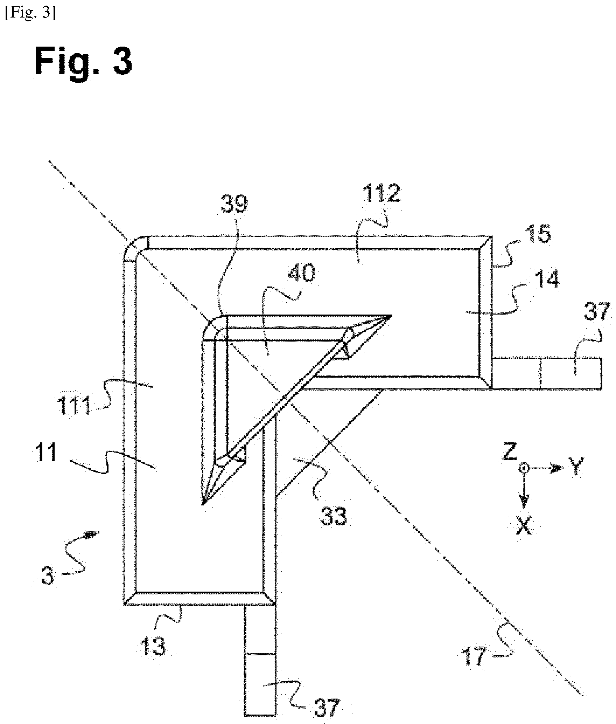

La pièce d'angle 3 présente un plan de symétrie 17 illustré en [Fig.3]. Le plan de symétrie 17 est orienté selon l'axe Z et se situe à 45 degrés de la première surface 13 et à 45 degrés de la deuxième surface 15.

Le corps 11 comprend une première et une deuxième paire de creux 19. La première paire de creux 19 est ménagée dans le corps 11 à partir de la première surface 13. Les creux 19 de la première paire de creux 19 sont normaux à la première surface 13, donc selon l'axe X. La deuxième paire de creux 19 est ménagée dans le corps 11 à partir de la deuxième surface 15. Les creux 19 de la deuxième paire de creux 19 sont normaux à la deuxième surface 15, donc selon l'axe Y.

Chaque creux 19 est délimité par au moins un bord faisant partie du corps 11. Ici, chaque creux 19 est délimité par quatre bords 20, deux bords verticaux et deux bords horizontaux. Le creux présente une section rectangulaire. La section des creux 15 possède une forme et des dimensions adaptées pour recevoir les poutres 5.

Dans un mode de réalisation non représenté, les creux présentent un seul bord. Lesdits creux présentent une section circulaire ou ovoïdale.

L'intersection de chaque creux 19 avec la première face 13 ou avec la deuxième face 15 forme une ouverture 21.

Les creux 19 au sein de chaque paire de creux 19 sont disposés à la verticale l'un de l'autre. Chaque paire de creux 19 comprend un creux supérieur et un creux inférieur. Le creux supérieur de chaque paire de creux 19 est sensiblement affleurant à la face supérieure 14, à une distance comprise entre 0 et 3 mm.

Au moins un des bords 20 de chaque creux 19 présente une patte 23 formée par découpe dans le corps 11. La patte 23 peut être délimitée par une découpe circulaire 231 en forme de demi-cercle d'une part et de deux découpes rectilignes 232 parallèles entre elles. Les découpes rectilignes 232 sont tangentes aux deux extrémités du demi-cercle de la découpe circulaire 231. Les découpes rectilignes 232 sont proximales des première et deuxième surfaces 13, 15 et les découpes circulaires 231 sont distales des première et deuxième surfaces 13, 15.

Des bords 20 de chaque creux 19 comprennent une série de rainures 25. Ici, les deux bords 20 verticaux de chaque creux 15 comprennent des rainures 25. Les rainures 25 sont obtenues par une succession régulière de nervures 27 en saillie par rapport audits bords 20 et espacées l'une de l'autre. Ici, les rainures 25 présentent une forme de créneaux.

A proximité de l'ouverture 21 de chaque creux 19, les nervures 27 présentent un congé 29 permettant de faciliter l'introduction des longerons et des traverses. Dans un mode de réalisation non représenté, les formes longitudinales 27 présentent un chanfrein.

Dans un mode de réalisation non représenté avec des creux de section circulaire ou ovoïdale, au moins une partie du bord comprend des rainures.

Sur la [Fig.2], une des poutres 5 est représentée emboîtée dans un des creux. Les autres creux 19 sont libres.

Des évidements 31 sont ménagés dans le corps 11 afin de diminuer sa masse et sa quantité de matière. Ici, les évidements 31 sont ménagés dans l'épaisseur des première et deuxième ailes 111, 112. Les évidements 31 sont agencés de manière à conserver la rigidité du corps 11. Chaque évidement 31 est disposé entre deux creux 19 d'une même paire. Ici, deux évidements 31 sont ménagés dans le corps 11 à partir de la première surface 13 et deux évidements 31 sont ménagés dans le corps 11 à partir de la deuxième surface 15. Les deux évidements de chaque surface 13, 15 sont séparés par une cloison de renfort 311.

Le corps 11 comprend au moins deux nervures de renfort 33 horizontales, disposées dans un plan XY. Les nervures de renfort 33 sont de forme généralement triangulaire ou trapézoïdale. Les nervures de renfort 33 relient la première aile 111 à la deuxième aile 112 du côté intérieur de la cornière ou par l'extérieur (non représenté). Les nervures de renfort 33 sont disposées dans un plan contenant au moins un des bords 20 des creux 19.

Ici, une troisième nervure de renfort 35 est disposée à équidistance des deux nervures de renfort 33. La troisième nervure de renfort 35 est à même hauteur que la cloison de renfort 311.

Des pattes de support 37 sont formées en saillie à partir de la première surface 13 et de la deuxième surface 15 dans les directions X et Y. Ici, les pattes de support 37 sont en saillie depuis l'intérieur des ailes 111, 112. Ici, les pattes de support 37 sont au nombre de quatre. Un perçage 371 est ménagé dans chaque patte de support 37. Les pattes de support 37 présentent une partie en forme de demi-disque et une partie rectangulaire. Les pattes de support 37 servent à fixer des éléments de décoration afin d'améliorer l'apparence de la structure de lit 1. Les éléments de décoration peuvent être des panneaux ou du tissu.

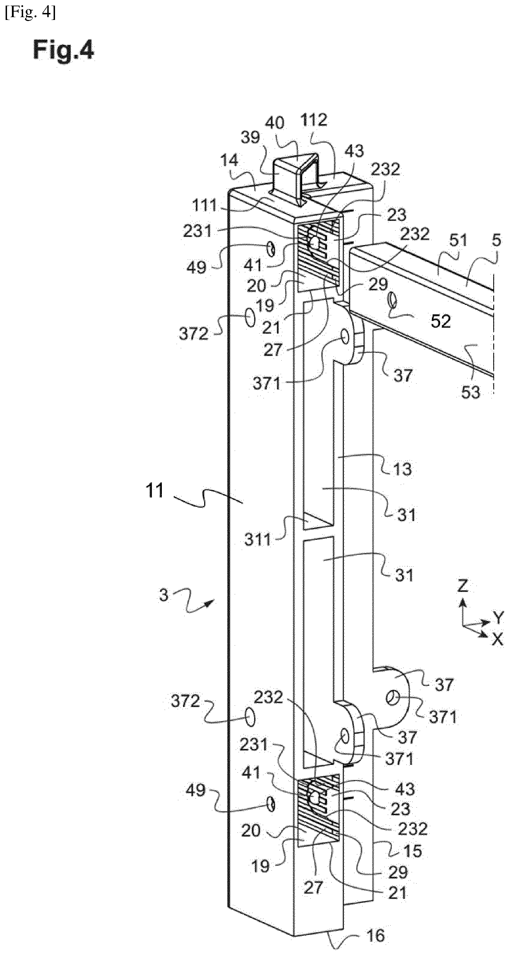

Des perçages supplémentaires 372, illustrés en [Fig.4], sur une face de chaque aile 111, 112 opposée aux pattes de support 37 présentent la même fonction.

Une butée 39 est en saillie à partir de la face supérieur 14. La butée 39 présente un forme extérieure triangulaire et comporte une face supérieure plane triangulaire. La butée 39 est creuse. La butée 39 maintient le sommier 2 installé sur la structure de lit 1, cf [Fig.5].

Un ergot 41 est disposé sur chaque patte 23. Les ergots 41 présentent une base 43 circulaire. La base 43 est coaxiale avec la découpe circulaire 232. Le diamètre de la base 43 est inférieure au diamètre de la découpe circulaire 232. Chaque ergot 41 est en saillie vers l'intérieur du creux 19 correspondant en partant de la patte 23. Chaque ergot 41 comprend une face inclinée présentant un bord circulaire. Une partie du bord circulaire proximale de l'ouverture 21 est tangente à la patte 23. La partie du bord circulaire distale de l'ouverture 21 est éloignée de la patte 23. Chaque ergot 41 est disposé à mi-hauteur du bord 20 correspondant.

Un perçage 49 est ménagé en face de chaque ergot 41 à travers le corps 11. Le diamètre de chaque perçage 49 peut correspondre au diamètre de la base 43. Chaque perçage 49 est débouchant. Chaque perçage 49 est disposé à mi-hauteur du bord 20 dans lequel ledit perçage 49 est ménagé.

La poutre 5 présente, ici, une section rectangulaire. La poutre 5 comprend deux faces verticales 53 et deux faces horizontales 51. La poutre 5 comprend un perçage 52 ménagé dans une des faces verticales 53. Le perçage 52 est disposé à mi-hauteur de la face 53. Le perçage 52 présente un diamètre analogue au diamètre de la base 43 de chaque ergot 41 mais légèrement supérieur de manière à pouvoir loger un des ergots 41. Le perçage 52 est disposé à proximité d'une extrémité de la poutre 5. Le perçage 52 est situé selon l'axe X respectivement Y en regard de l'ergot 41, la poutre 5 étant en position montée. Une distance entre le perçage 52 et l'extrémité de la poutre 5 est similaire à une distance entre l'ergot 41 et un fond du creux 19.

Une des poutres 5 est insérée dans chaque creux 19 de chaque pièce d'angle 3, cf figures 1 et 5. Les poutres 5 montées dans les creux 19 de la première paire de creux 19 sont orientées selon l'axe X. Les poutres 5 montées dans les creux 19 de la deuxième paire de creux 19 sont orientées selon l'axe Y. Les poutres 5 montées dans chaque paire de creux 19 sont parallèles entre elles. Les poutres 5 d'une paire de creux 19 sont perpendiculaires avec les poutres 5 de l'autre paire de creux 19.

Les poutres 5 sont maintenues en place axialement par les ergots 41 venant se loger dans les perçages 52 de ladite poutre 5. La liaison entre chaque poutre 5 et chaque creux 19 de la pièce d'angle 3 est rigide.

Les pièces d'angle 3 et les poutres 5 peuvent suffire à l'assemblage de la structure de lit 1.

Dans le mode de réalisation de la [Fig.5], la structure de lit 1 supporte un sommier de lit 54. Le sommier de lit 54 est posé sur la face supérieure 14 du corps 11. Le sommier de lit 54 repose partiellement sur les poutres 5 montées dans les creux supérieurs.

Dans un mode de réalisation non représenté, les longerons supérieurs montés dans les creux supérieurs des pièces d'angle comprennent en outre une série de perçages. Lesdits perçages sont orientés vers le haut. Lesdits perçages sont généralement disposés à intervalles réguliers. Lesdits perçages peuvent être ménagés dans la face horizontale 51 dirigée vers le haut. Lesdits perçages sont configurés pour accueillir et maintenir des embouts de lattes de sommier. Lesdits embouts sont configurés pour être insérés, notamment clipsés, dans lesdits perçages. Une latte de sommier est installée entre deux embouts. Chaque embout de ladite latte de sommier est disposé sur un des longerons supérieurs. Un sommier est ainsi formé. Ledit sommier et la structure de lit sont formés ensemble.

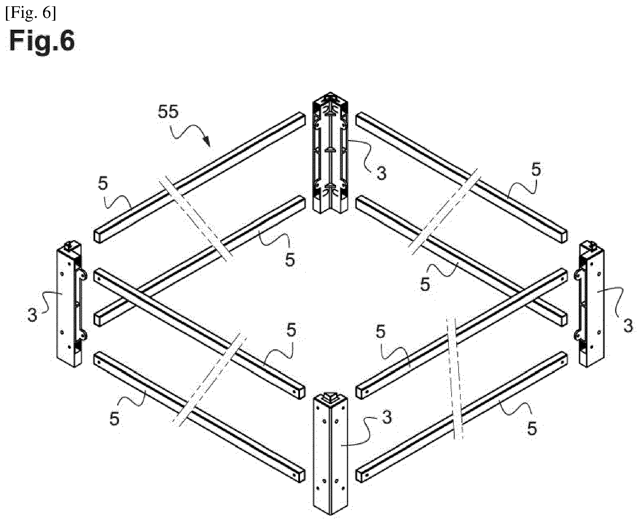

On fait référence à la [Fig.6].

Un kit d'assemblage 55 de structure de lit 1 comprend au moins quatre pièces d'angle 3 et huit poutres 5. La [Fig.6] montre comment les poutres 5 sont placées avant d'être montées.

Pour monter une structure de lit 1, un utilisateur emboîte chaque poutre 5 dans deux pièces d'angle 3 distinctes de manière à former, à la fin de l'assemblage, deux cadres étagés distants. Chaque poutre est emboîtée dans un des creux 19 des pièces d'angle 3 jusqu'à se clipser. Le clipsage d'une des poutres 5 dans un des creux 19 est obtenu lorsque l'ergot dudit creux 19 est logé dans le perçage 52 de la poutre.

Le procédé de montage suit les étapes suivantes.

L'utilisateur assemble, dans une première étape, un premier côté de la structure de lit 1 en emboîtant deux poutres 5 dans deux pièces d'angle 3, formant ainsi un premier rectangle. L'utilisateur emboîte, dans une deuxième étape, quatre poutres 5 dans les quatre creux 19 libres des deux pièces d'angle 3 du premier rectangle. L'utilisateur assemble, dans une troisième étape, un deuxième rectangle, identique au premier rectangle. L'utilisateur emboîte, dans une quatrième étape, les quatre extrémités libres des poutres 5 montées lors de la deuxième étape, dans les creux 19 libres du deuxième rectangle. Le premier et le deuxième rectangles peuvent être, au choix de l'utilisateur, soit les côtés longs de la structure de lit 1, soit les côtés courts de la structure de lit 1.

Pour démonter la structure de lit 1, l'utilisateur introduit un outil de diamètre inférieur au perçage 49 de la pièce d'angle 3 dans ledit perçage 49, de manière à pousser l'ergot 41 en déformant élastiquement la patte 23. L'ergot 41 sort du perçage 52 de la poutre. L'utilisateur peut alors sortir la poutre 5 du creux 19.

En d'autres termes, la structure de lit comprend huit poutres de structure et quatre pièces d'angle. Les poutres sont montées dans les pièces d'angle de manière à former deux cadres étagés distants, formant ainsi un cadre supérieur et un cadre inférieur. Chaque pièce d'angle comprend deux paires de logements pour les poutres. Chaque logement est orienté selon un axe. Les axes des logements de chaque paire de logements sont parallèles. Les axes des logements d'une paire de logements sont perpendiculaires aux axes des logements de la deuxième paire. Des rainures sont disposées au sein de chaque logement. Un ergot est disposé au sein de chaque logement sur une patte déformable élastiquement. Un perçage est ménagé à proximité de chaque extrémité de chaque poutre. Une fois la structure montée, les ergots sont logés dans les perçages de chaque poutre réalisant une liaison rigide entres les poutres et les pièces d'angle. Les pièces d'angle ont également une fonction de pied pour la structure de lit. La structure de lit est conçue de manière à pouvoir supporter un sommier. Le sommier repose à la fois sur une face supérieure de chaque pièce d'angle mais également sur les poutres du cadre supérieur.

## Revendications

1. Pièce d'angle (3) de structure de lit (1), comprenant un corps (11) rigide allongé selon un axe Z, le corps (11) comprenant une première face (13) normale à un axe X et une deuxième face (15) normale à un axe Y, les axes X, Y et Z formant un repère orthogonal, **caractérisée en ce qu'**une première paire de creux (19) est ménagée dans le corps (11) à partir de la première surface (13), les creux (19) de la première paire étant d'axe X, et une deuxième paire de creux (19) est ménagée dans le corps (11) à partir de la deuxième surface (15), les creux (19) de la deuxième paire étant d'axe Y, chaque creux (19) étant défini par au moins un bord (20) faisant partie du corps (11), ledit bord (20) comprenant une patte (23) découpée dans le corps (11), déformable élastiquement et supportant un ergot (41) de maintien en saillie dans le creux (19).

2. Pièce d'angle (3) de structure de lit (1) selon la revendication 1, dans laquelle le corps (11) est symétrique par rapport à un plan d'axe Z et situé à 45 degrés d'un plan XZ et le corps (11) est symétrique par rapport à un plan XY, les creux (19) présentent une section de profil rectangulaire, et des évidements (31) d'allègement sont ménagés dans le corps (11), les évidements (31) étant disposés entre les creux (19) d'une paire de creux (19).

3. Pièce d'angle (3) de structure de lit (1) selon la revendication 1 ou 2, dans laquelle un perçage (49) débouchant est ménagé dans le corps (11) face à chaque ergot (41).

4. Pièce d'angle (3) de structure de lit (1) selon l'une des revendications précédentes, dans laquelle chaque creux (19) comprend des rainures (25), parallèles à l'axe dudit creux (19), sur au moins une partie dudit au moins un bord (20) de chaque creux (19).

5. Pièce d'angle (3) de structure de lit (1) selon l'une des revendications précédentes, dans lequel le corps (11) comprend une face supérieure (14) et l'un des creux (19) de la première paire de creux (19) et l'un des creux (19) de la deuxième paire de creux (19) est sensiblement affleurant à la face supérieure (14) du corps (11), à une distance comprise entre 0 et 3 mm.

6. Pièce d'angle (3) de structure de lit (1) selon l'une des revendications précédentes, dans lequel le corps (11) présente une forme de cornière avec deux ailes (111, 112), les creux (19) étant ménagés dans une épaisseur des ailes (111, 112) de la cornière, et des nervures de renfort (33) sont disposées dans un plan XY sur le corps (11), les nervures de renfort (33) présentant une forme triangulaire ou trapézoïdale, les nervures de renfort (33) étant disposées dans un plan comprenant un des bords (20), préférablement une nervure supplémentaire de renfort (35) est disposée à équidistance des deux nervures de renfort (33).

7. Pièce d'angle (3) de structure de lit (1) selon l'une des revendications précédentes, dans laquelle des pattes (37) saillantes sont disposées parallèlement aux axes de direction, lesdites pattes (37) saillantes comprenant au moins un perçage (371).

8. Structure de lit (1) comprenant au moins quatre pièces d'angle (3) de structure de lit selon l'une des revendications précédentes, et huit poutres (5), chaque poutre (5) étant montée emboîtée dans deux creux (19) de deux pièces d'angle (3) de structure de lit (1) afin de former au moins deux cadres rigides étagés avec quatre poutres (5) chacun, lesdites poutres (5) comprenant des perçages (52) pour loger les ergots (41), de manière à verrouiller les poutres (5) dans les pièces d'angle (3).

9. Kit (55) comprenant au moins quatre pièces d'angle (3) de structure de lit (1) selon l'une des revendications 1-7 et au moins huit poutres (5) dans lesquelles des perçages (52) pour loger les ergots sont ménagés aux extrémités, de manière à verrouiller les poutres (5) dans les pièces d'angle (3).

10. Procédé de montage d'une structure de lit (1) comprenant au moins quatre pièces d'angle (3) de structure de lit selon l'une des revendications 1-7, et huit poutres (5), chaque poutre (5) étant montée emboîtée dans deux creux (19) de deux pièces d'angle (3) de structure de lit (1) afin de former au moins deux cadres rigides étagés avec quatre poutres (5) chacun, lesdites poutres (5) comprenant des perçages (52) pour loger les ergots (41), de manière à verrouiller les poutres (5) dans les pièces d'angle (3), ledit procédé comprenant, au montage, l'emboîtement des poutres (5) dans les creux (19) de manière à former deux cadres étagés distants.
